# EUROPEAN PATENT APPLICATION

(11) **EP 1 166 629 A1**
(43) Date of publication of application: **02.01.2002**
(21) Application number: 01850113.0
(22) Date of filing: 20.06.2001
(51) Int. Cl.: A01K 89/033, A01K 89/015, A01K 89/016

(54) **Bearing arrangement**

(30) Priority: 22.06.2000 SE 0002363
(71) Applicant: OPM Fishing Tackle Ltd., 04500 Kellokoski (FI)
(72) Inventor: Gustafsson, Mats, 553 36 Jönköping (SE)
(74) Representative: Arwidi, Bengt Dr.

(57) **Abstract**

The present invention refers to a bearing arrangement for reels, primarily fly fishing reels. The device comprises a drum (11) having a bearing ring (13) which forms a side edge of the drum and which at its peripheral, outer surface has a track (16) to receive the bearing balls (5) which are held together by a ring (6), the drum being enclosed by a cage (8) having a first, inner bearing ring (7) which has a contact surface for the balls and which by a thread is connected to a second, outer bearing ring (4) which also has a contact surface or the balls. A free volume (15) is formed between the first bearing ring (7) and the second bearing ring (4). The free volume (15) may be varied by adaptation of the setting of the outer bearing ring (4).

## Description

The present invention refers to a bearing arrangement for spinning or revolving reels, primarily fly fishing reels and other fishing reels.

The bearing arrangement, according to the invention and its embodiments, has the characteristic properties which are mentioned in the claims.

When fly fishing the reel is merely used for keeping of the fishing cord, which is rather thick och easily conform to the reel, which consequently should have a large diameter. It is also easier and quicker to wind in the cord if the reel has a large diameter. When casting, as much cord as is considered needed is manually pulled out in order to reach the position of the fish. When the fish bites, the reel is used to exhaust the fish, in particular big fish that can pull out a considerable length of cord. It is hereby easier to adjust and attain the desired break effect if the reel has a large diameter, which also diminishes the risk for breakage of the cord or the gut which is attached on the far end of the cord. These principles are known and have been considered at the construction of a number of reels, which, however, have a complicated construction.

The claims on a reel for fly fishing and other purposes is that it must function as storage for the cord as mentioned above. It should also function as a brake against running-out of the cord whereby the brake effect easily can be regulated with satisfactory accurateness. It must also be easy to change bobbin and cord. According to the present invention these claims are performed by a reel with the

In the following, the invention shall be closer described in connection with the example of performance shown by the enclosed drawings.

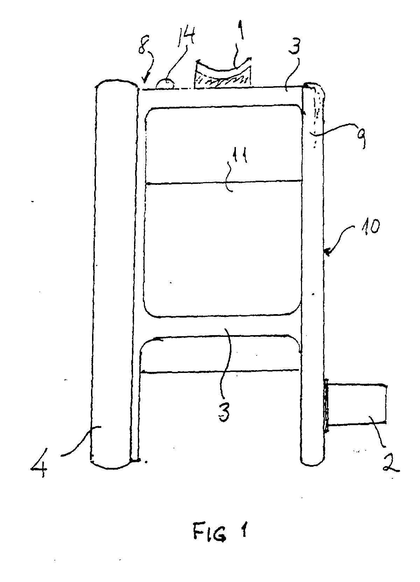

Figure 1 shows a fly fishing reel with bearing arrangement according to the invention.

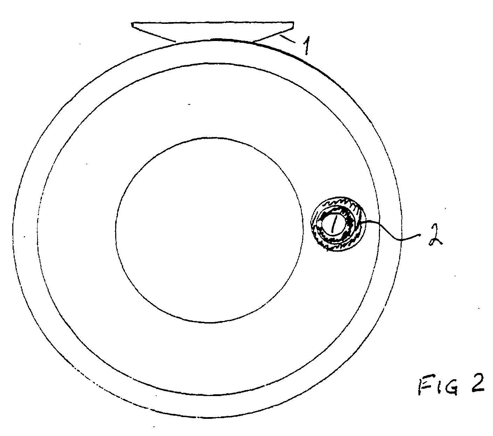

Figure 2 shows a different view of the reel according to drawing 1.

Figure 3 shows the reel according to figure 1 in cross-section.

Figure 4 shows a part of the design according to figure 3.

Figure 5 shows a part of the bearing arrangement.

Figure 6 shows another embodiment of a fly fishing reel according to the invention.

Figure 7 is a cross section of the reel of figure 6.

Figure 8 shows a part of the embodiment of figure 7.

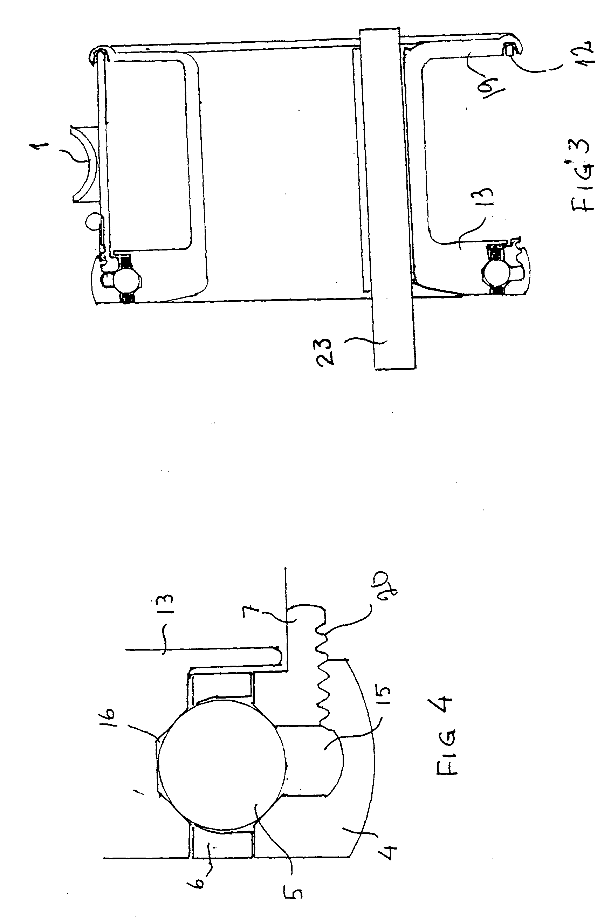

The fly fishing reel of the embodiments which are shown in the figures comprises a rod footing 1 which is fastened to or forms a part of three cross members 3 which are at right angle to the direction of rotation of the reel. The members are joined with both an outer ring 12 and an inner bearing ring 7, together these parts form a cage-like unit 8 which includes the cord steering function. The rotating part of the reel includes a drum 11 having side edges 13 and 19 which extend themselves outwards from the middle part of the drum. The two side edges will below be named the outer side edge 19 and the inner side edge 13. The outer side edge also comprises a rotation handle 2 having an outer part which is rotatably mounted on a shaft end on the outer side edge. The rotation handle may be mounted to any side of the reel or be made as a displacable rod 23 as shown in figure 3. The outer side edge may also at its periphery comprise an outer protective ring 9 which covers the outer ring 12 between the cross members.

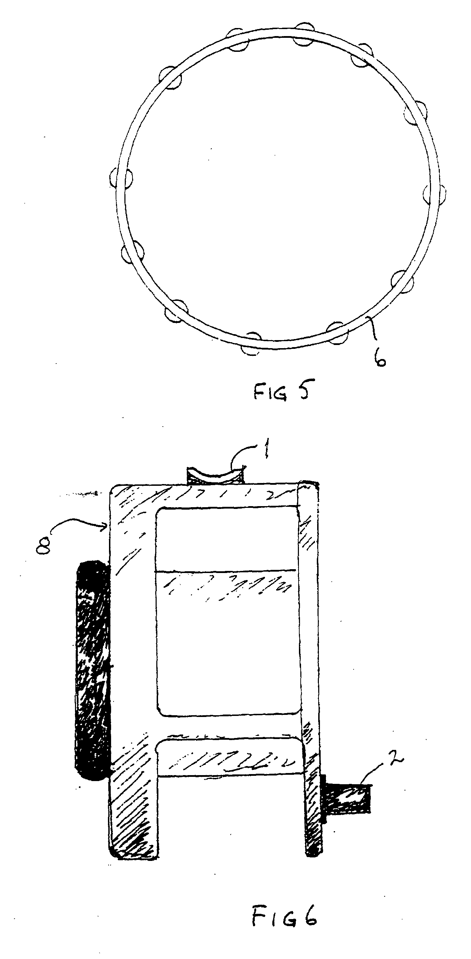

The inner side edge 13 of the drum also is a bearing ring and it has in its outer peripheral surface a track 16 to take in the bearing balls which are kept together at determined distances from each other by a ball holder ring 6. This has a special shape having the cross section at each ball opening which is shown in figure 4. The cross section is such that the balls may be displaced only in one direction in the ring which feature is used to adapt the breaking effect and to exchange the bobbin. The bearing balls may be radially displaced into the hollow space 15 and when the bearing ring 4 is slacked off then the balls 5 will get into the space 15 whereupon the drum, which forms the bobbin, can be pulled out and made free. The balls also contact a surface at the inner bearing ring 7 of the cross bars, which has an outer thread 20. The thread is meshing with a corresponding internal thread of the bearing ring 4 which also has a contact surface for the balls 5. Between the bearing rings 4 and 7 there is formed an empty volume 15.

At assembly of the reel the cross bar unit 8 is brought together with the drum 11 and the ring with the bearing balls is put into the track 16. The outer bering ring or nut 4 is screwed on to the thread 20 and the inertia of the bearing is adjusted by adaption of the tightening of the bearing ring 4. In the desired position the bearing ring 4 may be locked by means of a locking lever 14. Assembly and disasembly of the reel is simple and makes exchange of the drum easy.

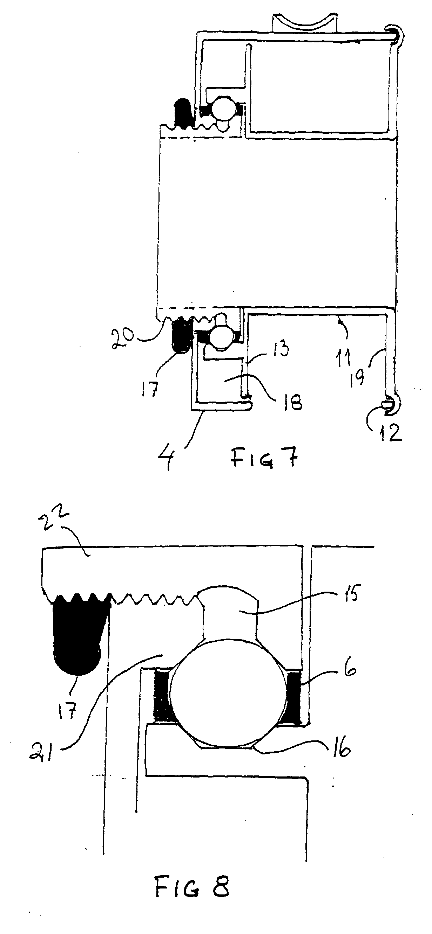

In the embodiment of the invention which is shown in figures 6-8 the inner bearing ring is designed in a different way and relative to the drum the thread 20 is positioned outside the bearing balls. Also the bearing ring 13 has a different design which among others means that the track 16 for the bearing balls is internal in stead of external. Moreover there is a locking or setting nut 17. The bearing ring 4 which functions as a nut and the bearing ring 13 are designed so that there is a space 18 formed between them which may be used for a breaking mechanism. Also in this embodiment the inertia of the bearing may be adjusted by adaptation of the setting of the bearing ring 4. The outer bearing track 21 of the second embodiment corresponds to the outer bearing track 7 of the first embodiment. The drum, which functions as a bobbin, is released in a corresponding way in the second embodiment thereby that the nut 22 is turned so that the volume 15 will become big enough to allow the balls to sink into the volume and become free from the bearing track 16.

The bearing arrangement which has been described above with reference to its use for fishing reels may also be used for other purposes where the stability, adjustablity and the possibility to easily release the rotating or turning part gives advantages, for example for wheels and turn-tables for various applications. In many applications it is also an advantage that the bearing arrangement does not require a conventional, massive shaft.

## Claims

1. Bearing arrangement for reels, primarily fly fishing reels **characterized by** a rotating drum (11) having a bearing ring (13), which forms one side edge of the drum and which at its peripheral, outer surface has a track (16) to receive bearing balls (5) which are held together by a ring (6), a cage (8) around the drum having a first, inner bearing ring (7) which has a contact surface for the balls and which by a thread is connected to a second, outer bearing ring (4) which also has a contact surface for the bearing balls.

2. Device according to claim 1 **characterized in that** a free volume (15) is formed between the first bearing ring (7) and the second bearing ring (4).

3. Device according to claim 2 **characterized in that** the free volume (15) may be varied by adaption of the setting of the outer bearing ring (4).

4. Device according to claim 3 **characterized in that** the outer bearing ring (4) may be loosened so that the balls fall into the volume (15) so that the drum may be released.

5. Device according to any of the preceding claims **characterized in that** the breaking of the drum (11) is controlled by adaptation of the setting of the bearing ring (4).
